# EUROPEAN PATENT APPLICATION

(11) **EP 4 701 205 A1**
(43) Date of publication of application: **25.02.2026**
(21) Application number: 24791921.0
(22) Date of filing: 11.04.2024
(51) Int. Cl.: H04N 21/431

(54) **VIDEO PROCESSING METHOD AND APPARATUS, DEVICE, AND MEDIUM**

(30) Priority: 18.04.2023 CN 202310418380
(71) Applicant: Beijing Zitiao Network Technology Co., Ltd., Beijing 100190 (CN)
(72) Inventor: GUO, Chaoyang, Beijing 100028 (CN); YANG, Jie, Beijing 100028 (CN); ZHI, Xuechao, Beijing 100028 (CN); ZENG, Weiming, Beijing 100028 (CN); GUO, Yunguang, Beijing 100028 (CN)
(74) Representative: Grünecker Patent- und Rechtsanwälte PartG mbB
(86) International application number: PCT/CN2024/087307
(87) International publication number: WO 2024/217336

(57) **Abstract**

Embodiments of the disclosure relate to a method, an apparatus, a device and medium for video processing. The method includes: obtaining a key frame of a target video; obtaining a sorting result for color densities of the key frame, and determining a target theme color corresponding to the key frame based on the sorting result for the color densities and a preset theme color selection condition; and sending information of the target theme color of the key frame to a client, so that the client renders a playback page background of the target video based on the target theme color. In the embodiments of the disclosure, the rendering effect can be effectively guaranteed while reducing the burden of the client, and the video viewing experience of a user is better improved.

## Description

**This** application claims priority to Chinese Patent Application No. 202310418380X, filed on April 18, 2023, entitled "METHOD, APPARATUS, DEVICE, AND MEDIUM FOR VIDEO PROCESSING", which is incorporated herein by reference in its entirety.

### FIELD

The present disclosure relates to the field of video processing technologies, and in particular, to a method, an apparatus, a device, and a medium for video processing.

### BACKGROUND

With popularization of multimedia, video has become an indispensable information carrier in people's daily life and work. A user may view a video picture presented on a video playback page. The inventor finds through research that, in the related art, a processing manner for a playback page background of the video (i.e., a playback page background of the video other than the video picture) needs to be improved.

### SUMMARY

The present disclosure provides a method, an apparatus, a device and a medium for video processing.

The embodiments of the present disclosure provides a method for video processing, applied to a server, and including: obtaining a key frame of a target video; obtaining a sorting result for color densities of the key frame, and determining a target theme color corresponding to the key frame based on the sorting result for the color densities and a preset theme color selection condition; and sending information of the target theme color of the key frame to a client, so that the client renders a playback page background of the target video based on the target theme color.

The embodiments of the present disclosure further provide an apparatus for video processing, applied to a server and including: a key frame obtaining module configured to obtain a key frame of a target video; a target theme color determining module configured to obtaining a sorting result for color densities of the key frame, and determine a target theme color corresponding to the key frame based on the sorting result for the color densities and a preset theme color selection condition; and a background rendering module configured to send information of the target theme color of the key frame to a client, so that the client renders a playback page background of the target video based on the target theme color.

The embodiments of the present disclosure further provide an electronic device. The electronic device includes: a processor; and a memory for storing instructions executable by the processor. The processor is configured to read the executable instructions from the memory and execute the instructions to implement the method for video processing provided by the embodiments of the present disclosure.

The embodiments of the present disclosure further provide a computer readable storage medium. The storage medium stores a computer program for performing the method for video processing provided by the embodiments of the present disclosure.

**The** embodiments of the present disclosure further provide a computer program product including a computer program which, when executed by a processor, implements the method for video processing provided by the embodiments of the present disclosure.

**It** should be appreciated that the content described in this section is not intended to identify key or critical features of embodiments of the present disclosure, nor to limit the scope of the present disclosure. Other features of the present disclosure will become readily apparent from the following description.

### BRIEF DESCRIPTION OF THE DRAWINGS

The accompanying drawings, which are incorporated herein and form a part of the description, illustrate embodiments consistent with the present disclosure and together with the description, serve to explain the principles of the disclosure.

To describe the technical solutions in the embodiments of the present disclosure or in the prior art more clearly, the following briefly introduces the accompanying drawings required for describing the embodiments or the prior art. Apparently, those skilled in the art may still derive other drawings from these accompanying drawings without creative efforts.
Fig. 1 is a schematic flowchart of a method for video processing provided by an embodiment of the present disclosure;
**Fig.** 2 is a flowchart of a method for determining a target theme color provided by an embodiment of the present disclosure;
Fig. 3 is a schematic structural diagram of an apparatus for video processing provided by an embodiment of the present disclosure;
Fig. 4 is a schematic structural diagram of an electronic device provided by an embodiment of the present disclosure.

### DETAILED DESCRIPTION

**In** order to more clearly understand the above-described objects, features and advantages of the present disclosure, the solutions of the present disclosure will be further described below. It should be noted that the the embodiments of the present disclosure and the features of the embodiments can be combined with each other without conflict.

**In** the following description, numerous specific details are set forth in order to provide a thorough understanding of the present disclosure, but the present disclosure may also be implemented in a way other than as described herein; apparently, the embodiments in the description are only a part of the embodiments of the present disclosure rather than all of the embodiments of the present disclosure.

The inventor finds through research that, in the related art, a processing manner for a playback page background of a video needs to be improved. Specifically, some relevant technologies will directly set the playback page background to a fixed color such as black, grey, etc., thus the background display is single, which cannot satisfy the requirements of a user. In other related technologies, a client is used to execute a theme color determining algorithm (which may be briefly called a color extraction algorithm), and a theme color of a playback page background is determined based on a played target video; however, the client running a color extraction algorithm generally has a certain time consumption, thus a problem of untimely processing occurs, especially for rapidly changing video frames (such as greater than 24 fps), thereby causing that the current background color cannot match with the video playback image well. In addition, the color extraction algorithm is integrated in the client, which not only causes a burden on a CPU of the client, but also makes an installation package of the client larger, which is not conducive to transmission and is also not conducive to subsequent update iteration. In addition, the color extraction algorithm used by a client also needs to be improved, which is mainly based on algorithms for extracting a theme color for a static picture, such as a binary color extraction algorithm and an octree color extraction algorithm. It is not only difficult to adapt to a video, but also easy to select a theme color that does not satisfy a user requirement, and thus also presents a poor appearance to a user.

**In** order to improve at least one of the above problems, the embodiments of the present disclosure provide a method, an apparatus, a device and a medium for video processing. The specific description is as follows:

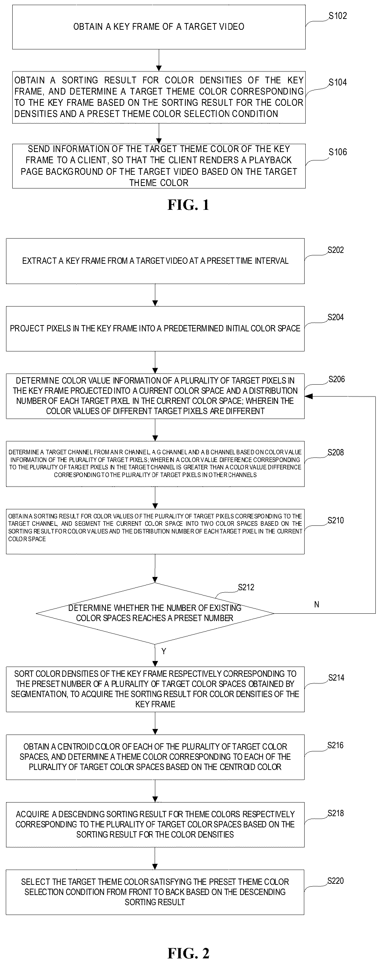

Fig. 1 is a schematic diagram of a flowchart of a method for video processing provided by an embodiment of the present disclosure. The method may be performed by an apparatus for video processing. The apparatus may be implemented by software and/or hardware, and may generally be integrated into an electronic device. The electronic device may be a server. As shown in Fig. 1, the method mainly includes the following steps S102-S106:
At step S102, a key frame of a target video is obtained.

**The** embodiments of the present disclosure do not limit the type and content of a target video. There may be a plurality of key frames of the target video. Specifically, a video may be considered as a set composed of several pictures containing timing information. In some embodiments, a key frame may be extracted from a target video at a preset time interval, and the time interval may be flexibly set according to requirements. By way of example, assuming that the time interval is t, and the number of frames played per second is f, the obtained key frames of the target video may include [0, f*t,2*f*t,..., n*f*t] frames. As compared with analyzing and processing all frames of the target video, by extracting key frames at a preset time interval, the processing resources required to be consumed can be better reduced, the waste of the processing resources caused by too small difference between adjacent frames is avoided, the processing efficiency can be improved, and the manner of extracting key frames at a preset time interval is also more convenient and easier to implement, and the obtained key frames have certain representativeness, which helps to determine the video playback page background reasonably and reliably based on the key frame subsequently.

At step S104, a sorting result for color densities of the key frame is obtained, and a target theme color corresponding to the key frame is determined based on the sorting result for color densities and a preset theme color selection condition.

**In** practical applications, the key frame may be first quantized, for example, the frame is converted into a tensor having dimensions of [W, H, C], wherein W represents the width, H represents the height, and C represents the number of channels. For example, a color image may be converted into a tensor of 480*360*3, where 3 represents the number of channels, which respectively correspond to three color channels of Red, Green, and Blue, and may be referred to as R channel, G channel, and B channel for short. According to the embodiments of the present disclosure, the color densities of a key frame may be obtained, and the color densities of the key frame is sorted, so as to determine a dominant color (i.e., a theme color) in the key frame, and then a target theme color of the key frame is determined based on a sorting result for color densities, wherein the target theme color satisfies a theme color selection condition.

**In** some implementation examples, the preset theme color selection condition includes a number restriction condition of the target theme color. For example, the number constraint condition indicates that N target theme colors need to be selected, where N is a positive integer, which may be flexibly set according to a requirement, and is not limited herein. For example, N may be 2.

**In** some implementation examples, the preset theme color selection condition further includes a color value constraint condition of the target theme color. For example, a color value condition that a target theme color needs to satisfy may be limited according to a requirement, so as to filter color values such as black, white, and the like that are not desired to be selected, thereby ensuring that a finally selected target theme color conforms to the aesthetics of the general public or has a better scene presentation effect. By way of example, the color value constraint condition may include: a difference between any two of a color value of an R channel, a color value of a G channel, and a color value of a B channel of the target theme color is not less than a preset threshold (which may be flexibly set according to an actual requirement, for example, may be 30). In other words, the theme color with a difference between any two of the color value of the R channel, the color value of the G channel, and the color value of the B channel being less than the preset threshold may be filtered out by using the color value constraint condition. That is, colors with approximate R, G and B values are filtered out, for example, colors, such as pure black, pure white and the like have approximate R, G and B values. However, the scene performance effect presented to people by using such colors as colors of the video playback page background is single, whin cannot satisfy a user requirement, and therefore, by setting a color value constraint condition, a background presentation effect of a video playback page rendered based on a finally selected target theme color can be effectively ensured, therefore ensuring the user's experience.

**In** an actual application, the server may further store, in the database, the target theme color corresponding to the key frame of the target video and the information of the target video in an associated manner, and a specific storage manner is not limited herein.

At step S106, the information of the target theme color of the key frame is sent to the client, so that the client renders the playback page background of the target video based on the target theme color.

For example, in response to receiving a video information obtaining request initiated by a client for a target video, a material of the target video and information of the target theme color of the key frame are sent together to the client, so that the client can directly use the target theme color of the key frame pre-determined by a serving end to render a playback page background of the target video. In practical applications, the number of key frames may be multiple, and the number of target theme colors of each key frame may also be one or more. The target theme color of each key frame may be delivered together with a video material in the form of an RGB list, so that when a client plays a target video based on the video material, the playback page background of the target video may be processed based on the RGB list, thereby achieving an effect such as dynamic color change.

**In** conclusion, the method for video processing provided in the embodiment of the present disclosure mainly has one or more of the following advantages: 1. a target theme color of a key frame of a target video is determined by a server, and the client itself does not need to determine the target theme color of the key frame; therefore, calculation resources of the client can be fully saved, and the client is also facilitated to perform timely rendering; 2. there is no need to integrate an algorithm for determining a target theme color of a key frame of a video for a client, which can not only effectively reduce the size of an installation package corresponding to the client, but also facilitate the server in performing optimization adjustment on the described algorithm subsequently; 3. the target theme color is determined on the basis of a sorting result for color densities of the key frame and a theme color selection condition, thus the accuracy and reliability of the target theme color can be effectively ensured when it is ensured that the target theme color satisfies a requirement; 4. rendering a playback page background of a target video based on a target theme color, so that the playback page background matches the target video, thereby effectively improving video viewing experience of a user.

In some embodiments, an embodiment of the present disclosure provides an example of obtaining a sorting result for color densities of the key frame. For example, the following steps may be performed with reference to step A and step C:

At step A, pixels in the key frame are projected to a predetermined initial color space, in which the initial color space may be, for example, an RGB color space (also referred to as an RGB color space); and by establishing color values of three color channels, i.e., R, G and B, in a Cartesian coordinate system, color representation is performed in the form of a cube, in which reference may be made to the relevant art for a specific construction method of the color space, and the details will not be described herein again.

At step B, pixel information of the key frame is obtained, and the initial color space is segmented based on the pixel information, so as to acquire a plurality of target color spaces. In practical application, the number of the target color spaces is a multiple of 2, for example, 64, 128, etc., and the specific number can be flexibly set according to requirements. By way of example, at least one segmentation operation may be performed on the initial color space based on the pixel information until a predetermined number of target color spaces are acquired. The segmentation operation is used to segment each current color space into two color spaces respectively, a current color space corresponding to the first segmentation operation is an initial color space, and a current color space corresponding to the non-first segmentation operation is a color space obtained by a previous segmentation operation. For example, an initial color space B is first segmented to acquire two color spaces B1 and B2, then the two color spaces are segmented respectively, B1 is segmented into B1.1 and B1.2, B2 is segmented into B2.1 and B2.2, then B1.1, B1.2, B2.1, B2.2 are further segmented respectively, and so on, until a predetermined number of color spaces are acquired, and the finally acquired color spaces are the target color spaces.

By means of the method, a pixel mapping result of the key frame corresponding to the plurality of target color spaces can be acquired; pixels in the key frame can be classified through the target color spaces; and then the colors of pixels in the key frame are analyzed by taking the target color space as a unit, thereby not only being convenient and efficient, but also making the extracted theme color of the key frame more accurate.

In some specific implementation examples, the segmentation is performed according to steps 1 to 3:

At step 1, color value information of a plurality of target pixels projected from the key frame into a current color space and a distribution number of the target pixels in the current color space are determined. As described above, the current color space corresponding to the first segmentation operation is an initial color space, and the current color space corresponding to a non-first segmentation operation is a color space obtained by a previous segmentation operation. By way of example, color values of different target pixels are different, where the color value information includes a color value of an R channel, a color value of a G channel, and a color value of a B channel. In addition, in a key frame image, a pixel of a certain color value may appear more than once, for example, there may be n pixel points (255, 255, 255) in a key frame, and the distribution number of may be understood as the number of times that a certain color appears.

At step 2, a target channel is determined from the R channel, the G channel and the B channel according to color value information about the plurality of target pixels; wherein a corresponding color value difference for the plurality of target pixels in the target channel is greater than a corresponding color value difference for the plurality of target pixels in other channels. It should be understood that each target pixel corresponds to an R color value, a G color value and a B color value, and a maximum color value difference corresponding to the R channel is a difference between a maximum value and a minimum value of the R color values in the plurality of target pixels, and is assumed to be Rd; the maximum color value difference corresponding to the G channel is a difference between the maximum value and the minimum value of the G color values in the plurality of target pixels, and is assumed to be Gd; the maximum color value difference corresponding to the B channel is the difference between the maximum value and the minimum value of the B color value in the plurality of target pixels, and is assumed to be Bd, then the color channel corresponding to the maximum value among Rd, Gd, and Bd is taken as the target channel. With the above method, the target channel with the maximum color value difference can be effectively determined, so as to facilitate subsequent segmentation of the current color space based on the target channel.

At step 3, a sorting result for color values of the plurality of target pixels in the target channel is obtained, and the current color space is segmented based on the sorting result for color values and the distribution number of the target pixels in the current color space.

Assuming that the target channel is an R channel, sorting is performed on the plurality of target pixels in a descending order based on the R color value of each target pixel, thereby acquiring the sorting result for color values. Further, the current color space may be segmented based on the sorting result for color values and the distribution number of the target pixels, to acquire two segmented color spaces corresponding to the current color space. In some specific implementation examples, a median color value of the sorting result for color values may be determined, and based on the median color value and the distribution number, the current color space is segmented into two new color spaces. The color values corresponding to the target pixels in one new color space in the target channels are all greater than the median color value, and the color values corresponding to the target pixels in another new color space in the target channels are all not greater than the median color value; and the number of each of the target pixels contained in new color space equals the distribution number of the corresponding target pixel in the current color space. For ease of understanding, the following steps 3.1 and 3.2 may be referred to for implementation:
At step 3.1, a median color value of the sorting result for color values is determined, and based on the median color value, a plurality of target pixels is segmented into two groups of pixels.

The median color value is a color value located in the middle of the sorting result for color values. By way of example, the sorting result for color values is a descending sorting result for color values. Based on the median color value, the sorting result for color values may be divided into two, and accordingly, a plurality of target pixels may be divided into two pixel groups. The color value corresponding to the target pixel of one pixel group in the target channel is greater than the median color value, and the color value corresponding to the target pixel of another pixel group in the target channel is not greater than the median color value. In other words, the pixels in the current color space are divided into two types according to the color values, so that the current color space is segmented reasonably based on the pixel segmentation result subsequently.

At step 3.2, based on the two pixel groups and the distribution number of each target pixel in a current color space, the current color space is segmented into two new color spaces; wherein the pixel groups correspond to new color spaces on a one-to-one basis, and the number of each of the target pixels in a corresponding pixel group contained in the new color space is equal to the distribution number of each of the target pixels in the current color space. That is, assuming that the number of the target pixel A contained in the current color space is N1 and the number of the target pixel B is N2, and assuming that the pixel group to which the target pixel A belongs corresponds to a new color space, the number of the target pixel A contained in the color space is N1. Assuming that a pixel group to which the target pixel B belongs corresponds to another new color space, the number of the target pixel B included in the color space is N2. By means of the method, pixels in a current color space can be reasonably and reliably classified, two new color spaces obtained by segmentation can be determined, and based on the distribution number of target pixels, it is helpful to extract a color that dominates the color.

At step C, the color densities of the key frame respectively corresponding to the plurality of target color spaces are sorted to acquire the sorting result for the color densities of the key frame. Color density may be understood as a density of pixels, and in particular, may be understood as densities of target pixels of key frame contained in a target color space. Sorting the color densities in the plurality of target color spaces in descending order to acquire a descending order result for color densities of the key frames. The color that is higher in the descending sorting result may be regarded as occupying a dominant position in the key frame, so that the theme color of the key frame may be determined rationally and reliably on this basis.

Further, when the target theme color corresponding to the key frame is determined according to the sorting result of the color density and the preset theme color selection condition, reference may be made to Steps a to c for execution:
At step *a,* a centroid color of each of the plurality of target color spaces is obtained, and a theme color corresponding to each of the plurality of target color spaces is determined based on the centroid color.

**In** the embodiments of the present disclosure, the centroid color of the target color space may be directly used as the theme color of the target color space. By way of example, the centroid color may be obtained by respectively obtaining an R mean value, a G mean value and a B mean value of the target color space. Specifically, color values of all pixels in the target color space in an R channel may be averaged to acquire the R mean value. The G mean value and B mean value are also acquired in the same method, which will not be described herein again. In this way, the corresponding theme color of each target color space can be obtained conveniently and quickly.

At step *b*, based on the result of the sorting result for color densities, a descending sorting result for the theme colors corresponding to each of the plurality of target color spaces are acquired. It is assumed that the sorting result for color densities is descending, and the descending sorting result for theme color is consistent with the descending sorting result for color densities. For example, if the color density of the target color space 1 is greater than the color density of a target color space 2 which is greater than the color density of a target color space 3, then the descending sorting results of the theme colors are respectively the theme color of the target color space 1, the theme color of the target color space 2, and the theme color of the target color space 3.

At step c, based on a descending sorting result, a target theme color satisfying a preset theme color selection condition is selected. By way of example, the target theme color satisfying the preset theme color selection condition may be selected from front to back.

The descending sorting result may be represented in the form of a theme color list; starting from a first theme color, it is determined whether a theme color selection condition is satisfied; if so, the theme color is taken as a target theme color; then, it is determined whether a second theme color satisfies the theme color selection condition, and so on, until all target theme colors satisfying the theme color selection condition are selected. For example, the theme color selection condition includes a number constraint condition (for example, N target theme colors need to be selected) and a color value constraint condition (a condition that an R color value, a G color value, and a B color value of the target theme color need to be satisfied), and in the foregoing manner, based on a descending sorting result for theme colors, the first N theme colors satisfying the color value constraint condition are selected as the target theme colors.

By means of the method, a required number of target theme colors can be selected, and the color values of the selected target theme colors satisfies requirements, thereby guaranteeing the sensory experience of a user.

**On** the basis of the foregoing, reference may be made to a flowchart of a method for determining a target theme shown in Fig. 2, which mainly includes the following steps S202 to S210:
At step S202, a key frame is extracted from a target video at a preset time interval.
At step S204, pixels in the key frame are projected into a predetermined initial color space.
At step S206, color value information of a plurality of target pixels in the key frame are projected into a current color space and a distribution number of each target pixel in the current color space are determined; wherein the color values of different target pixels are different; and the current color space corresponding to a first segmentation operation is the initial color space, and the current color space corresponding to a non-first segmentation operation is a color space acquired by a previous segmentation operation.
At step S208, a target channel is determined from an R channel, a G channel and a B channel based on color value information of the plurality of target pixels; wherein a color value difference corresponding to the plurality of target pixels in the target channel is greater than a color value difference corresponding to the plurality of target pixels in other channels.
At step S210, a sorting result for color values of the plurality of target pixels corresponding to the target channel is obtained, and the current color space is segmented into two color spaces based on the sorting result for color values and the distribution number of each target pixel in the current color space.
At step S212, whether the number of existing color spaces reaches a preset number is determined. If so, step S214 is executed, and if not, it is returned to execute step S206. The color spaces are segmented in the foregoing recursive manner until the preset number of target color spaces as required are reached.
At step S214: the color densities of the key frame respectively corresponding to the preset number of a plurality of target color spaces obtained by segmentation are sorted, to acquire the sorting result for color densities of the key frame.
At step S216, a centroid color of each of the plurality of target color spaces is obtained, and a theme color corresponding to each of the plurality of target color spaces is determined based on the centroid color.
At step S218, a descending sorting result for theme colors respectively corresponding to the plurality of target color spaces is acquired based on the sorting result for color densities.
At step S220, the target theme color satisfying the preset theme color selection condition is selected from front to back based on the descending sorting result.

By means of the method, a target theme color of a key frame of a target video can be rationally and reliably selected by means of a server. For a specific implementation of the foregoing steps, reference may be made to the foregoing related content, which is not limited herein.

After determining the target theme color corresponding to the key frame of the target video by using the foregoing manner provided in the embodiment of the present disclosure, the server may send the target theme color corresponding to the key frame to the client, so that the client can directly render the playback page background of the target video based on the target theme color. By way of example, an embodiment of the present disclosure provides a specific implementation for a client to render the playback page background of a target video based on the target theme color, for example, including the following step 1) to step 2):
At step 1): video time information corresponding to the target theme color of the key frame is determined based on a total duration of the target video and the number of key frames. It should be understood that, in the embodiment of the present disclosure, the server may not attach a timestamp to each key frame, or not inform the client of a specific time interval for extracting a key frame. Instead, the client calculates timestamp information corresponding to the target theme color of each key frame based on the total duration of the target video and the number of key frames. In a specific implementation, the server and the client may agree in advance that the key frames are extracted at equal intervals, but the server does not need to send the specific time interval for extracting the key frames or the time of each key frame to the client, and the client may determine the time interval between adjacent key frames directly according to the ratio of the total duration of the target video to the number of key frames, thus, the video time corresponding to the target theme color of each key frame is determined, which not only saves storage and bandwidths, but also facilitate the server to dynamically adjust the frame extraction interval.
At step 2): theme color information corresponding to a time period between adjacent key frames is determined based on the video time information corresponding to the target theme color. Specifically, on the basis of a target theme color corresponding to each adjacent key frame, a color gradient algorithm may be used to determine a theme color at each specified time instant in a time period between adjacent key frames. The specified time instant, for example, may be determined based on a ratio of a time period to a preset time interval, and may also be determined based on a playback time instant of a video frame of the target video contained in the adjacent key frame, which may be flexibly set according to the requirements.
   For ease of understanding, it is assumed that the adjacent keyframes include a key frame A at time T1 and a key frame B at time T2. The key frame A corresponds to a theme color A, and the key frame B corresponds to a theme color B. In this case, according to the theme color A and the theme color B, a gradient theme color corresponding to the plurality of time instants within a time period between the time instant T1 and the time instant T2 is determined, so as to gradually and dynamically change the theme color A at the time instant T1 to the theme color B at the time instant T2, so as to ensure the visual sense of the user.
At step 3): the playback page background of the target video is rendered according to the target theme color corresponding to the key frame and the theme color information corresponding to the time period between the adjacent key frames.

By rendering the playback page background of the target video in the described manner, dynamic matching between the playback page background and the target video can be achieved, and an immersion experience is presented to a user viewing the target video, thereby greatly improving the user experience.

According to the technical solution provided in the embodiments of the present disclosure, a key frame of a target video can be obtained by a server, a target theme color corresponding to the key frame is determined based on the sorting result for color densities and a preset theme color selection condition, and is sent to a client, so that the client can directly render a playback page background of the target video based on the target theme color of the key frame. The above-mentioned method mainly has one or more of the following advantages: 1. a target theme color of a key frame of a target video is determined by a server, and the client itself does not need to determine the target theme color of the key frame; therefore, calculation resources of the client can be fully saved, and the client is also facilitated to perform timely rendering; 2. there is no need to integrate an algorithm for determining a target theme color of a key frame of a video for a client, which can not only effectively reduce the size of an installation package corresponding to the client, but also facilitate the server in performing optimization adjustment on the described algorithm subsequently; 3. the target theme color is determined on the basis of a sorting result for color densities of the key frame and a theme color selection condition, thus the accuracy and reliability of the target theme color can be effectively ensured when it is ensured that the target theme color satisfies a requirement; 4. rendering a playback page background of a target video based on a target theme color, so that the playback page background matches the target video, thereby effectively improving video viewing experience of a user. In conclusion, the method for rendering the playback page background of the video provided by the embodiment of the present disclosure is better, which can effectively guarantee the rendering effect while reducing burden of the client, and can better improve the video viewing experience of the user.

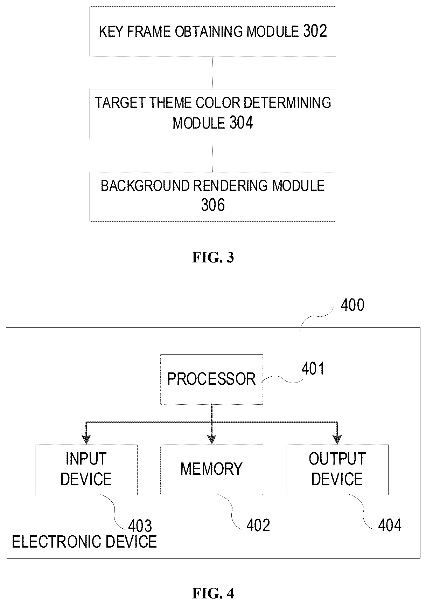

Corresponding to the foregoing method for video processing, Fig. 3 is a schematic structural diagram of an apparatus for video processing according to an embodiment of the present disclosure. The apparatus may be implemented by software and/or hardware, may be generally integrated in an electronic device, and may be applied to a server. As shown in Fig. 3, the apparatus for video processing includes:
a key frame obtaining module 302 configured to obtain a key frame of a target video;
a target theme color determining module 304 configured to obtaining a sorting result for color densities of the key frame, and determine a target theme color corresponding to the key frame based on the sorting result for color densities and a preset theme color selection condition;
a background rendering module 306 configured to send information of the target theme color of the key frame to a client, so that the client renders a playback page background of the target video based on the target theme color.

**The** above-mentioned method mainly has one or more of the following advantages: 1) a target theme color of a key frame of a target video is determined by a server, and the client itself does not need to determine the target theme color of the key frame; therefore, calculation resources of the client can be fully saved, and the client is also facilitated to perform timely rendering; 2) there is no need to integrate an algorithm for determining a target theme color of a key frame of a video for a client, which can not only effectively reduce the size of an installation package corresponding to the client, but also facilitate the server in performing optimization adjustment on the described algorithm subsequently; 3) the target theme color is determined on the basis of a sorting result for color densities of the key frame and a theme color selection condition, thus the accuracy and reliability of the target theme color can be effectively ensured when it is ensured that the target theme color satisfies a requirement; 4) rendering a playback page background of a target video based on a target theme color, so that the playback page background matches the target video, thereby effectively improving video viewing experience of a user.

**In** some embodiments, the target theme color determining module 304 is specifically configured to project pixels in the key frame to a predetermined initial color space; obtain pixel information of the key frame, and segment the initial color space based on the pixel information to acquire a plurality of target color spaces; and sort color densities of the key frame respectively corresponding to the plurality of target color spaces to acquire the sorting result for color densities of the key frame.

**In** some embodiments, the target theme color determining module 304 is specifically configured to perform at least one segmentation operation on the initial color space based on the pixel information until a preset number of target color spaces are acquired. The segmentation operation is used to segment each current color space into two color spaces respectively, the current color space corresponding to the first segmentation operation is the initial color space, and the current color space corresponding to a non-first segmentation operation is a color space obtained by a previous segmentation operation.

**In** some embodiments, the segmentation operation includes: determining color value information of a plurality of target pixels projected from the key frame into a current color space and a distribution number of the target pixels in the current color space; determining a target channel from an R channel, a G channel and a B channel according to color value information of the plurality of target pixels, wherein a corresponding color value difference for the plurality of target pixels in the target channel is greater than a corresponding color value difference for the plurality of target pixels in other channels; and obtaining a sorting result for color values of the plurality of target pixels in the target channel, and segmenting the current color space based on the sorting result for color values and the distribution number of the target pixels in the current color space.

**In** some embodiments, the segmentation operation further includes: determining a median color value of the sorting result for color values, and segmenting the current color space into two new color spaces based on the median color value and the distribution number of the target pixels in the current color space.

**In** some embodiments, the target theme color determining module 304 is specifically configured to obtain a centroid color of each of the plurality of target color spaces, and determining, based on the centroid color, a theme color corresponding to each of the plurality of target color spaces; acquire, based on the sorting result for color densities, a descending sorting result for theme colors respectively corresponding to the plurality of target color spaces; and select, based on the descending sorting result, the target theme color satisfying the preset theme color selection condition.

**In** some embodiments, the preset theme color selection condition includes a number constraint condition for the target theme color.

In some embodiments, the preset theme color selection condition further includes a color value constraint condition for the target theme color.

In some embodiments, the color value constraint condition includes: a difference value between any two of a color value of an R channel, a color value of a G channel, and a color value of a B channel of the target theme color being not less than a preset threshold.

In some embodiments, the key frame obtaining module 302 is specifically configured to extract a key frame from the target video at a preset time interval.

In some embodiments, a background rendering module 306 is specifically configured to: determine video time information corresponding to the target theme color of the key frame based on a total duration of the target video and the number of key frames; determine, based on the video time information corresponding to the target theme color, theme color information corresponding to a time period between adjacent key frames; and render the playback page background of the target video according to the target theme color corresponding to the key frame and the theme color information corresponding to the time period between the adjacent key frames.

The apparatus for video processing provided in the embodiments of the present disclosure may execute the method for video processing provided in any embodiment of the present disclosure, and has corresponding functional modules for executing the method and beneficial effects.

It may be clearly understood by those skilled in the art that, for the purpose of convenient and brief description, for a specific working process of the foregoing described apparatus embodiment, reference may be made to a corresponding process in the method embodiment, and details are not described herein again.

Fig. 4 is a schematic structural diagram of an electronic device according to an embodiment of the present disclosure. As shown in Fig. 4, the electronic device 400 includes one or more processors 401 and a memory 402.

The processor 401 may be a central processing unit (CPU) or other form of processing unit having data processing and/or instruction execution capabilities, and may control other components in electronic device 400 to perform desired functions.

The memory 402 may include one or more computer program products that may include various forms of computer-readable storage media, such as a volatile memory and/or a non-volatile memory. The volatile memory may include, for example, a random-access memory (RAM), a cache, and/or the like. The non-volatile memory may include, for example, a read-only memory (ROM), a hard disk, and a flash memory. One or more computer program instructions may be stored on the computer readable storage medium, and the processor 401 may run the program instructions to implement the foregoing method for video processing and/or other desired functions of the embodiments of the present disclosure. Various contents such as an input signal, a signal component, a noise component, etc., may also be stored in the computer readable storage medium.

In one example, the electronic device 400 may also include an input device 403 and an output device 404, which are interconnected via a bus system and/or other forms of connection mechanisms (not shown).

In addition, the input device 403 may include, for example, a keyboard, a mouse, and the like.

**The** output device 404 may output various information including the determined distance information, direction information, and the like to the outside. The output device 404 may include, for example, a display, a speaker, a printer, and a communication network and remote output device connected thereto, and the like.

**Of** course, for simplicity, only some of the components of the electronic device 400 relevant to the present disclosure are shown in Fig. 4, and components such as buses, input/output interfaces, etc. are omitted. In addition, the electronic device 400 may also include any other suitable components depending on the particular application.

**In** addition to the above method and device, the embodiments of the present disclosure may also be a computer program product, which includes computer program instructions, the computer program instructions, when executed by a processor, enable the processor to perform the video processing method provided by the embodiments of the present disclosure.

**The** computer program product may write program codes for performing the operations of the embodiments of the present disclosure in any combination of one or more programming languages. The programming languages include an object-oriented programming language, such as Java, C++ or the like, and conventional procedural programming languages, such as the "C" programming language or similar programming languages. The program code may execute entirely on the user computing device, execute partly on the user device, execute as a stand-alone software package, execute partly on the user computing device and execute partly on a remote computing device, or execute entirely on the remote computing device or server.

**In** addition, an embodiment of the present disclosure may also be a computer readable storage medium, having computer program instructions stored thereon, and when the computer program instructions are run by a processor, the processor is enabled to perform the method for video processing provided in the embodiment of the present disclosure.

**The** computer readable storage medium may be any combination of one or more readable mediums, and the readable medium may be a readable signal medium or a readable storage medium. The readable storage medium may include, for example, but is not limited to, an electronic, magnetic, optical, electromagnetic, infrared, or semiconductor system, apparatus, or device, or any suitable combination of the foregoing. More specific examples (a non-exhaustive list) of the readable storage medium would include the following: an electrical connection having one or more wires, a portable disk, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

An embodiment of the present disclosure further provides a computer program product, including a computer program and/or instructions. When executed by a processor, computer program and/or instructions implement the method for video processing in the embodiment of the present disclosure.

**It** should be understood that, before the technical solutions disclosed in the embodiments of the present disclosure are used, the user should be informed of the type, the usage range and the usage scenario of the personal information, and the like related to the present disclosure in an appropriate manner and the authorization of the user should be obtained according to relevant legal regulations.

**For** example, in response to receiving an active request from a user, prompt information is sent to the user to explicitly prompt the user that an operation requested by the user will require acquisition and use of personal information of the user. Thus, the user can autonomously select, according to the prompt information, whether to provide personal information to software or hardware such as an electronic device, an application program, a server, or a storage medium that executes the operations of the technical solutions of the present disclosure.

As an optional but non-limiting implementation, in response to receiving an active request from a user, a manner of sending prompt information to the user may be, for example, a manner of a pop-up window, where the pop-up window may present the prompt information in a text manner. In addition, the pop-up window may also carry a selection control for the user to select "agree" or 'don't agree" to provide personal information to the electronic device.

**It** should be understood that, the above processes of notifying and obtaining the user authorization are only illustrative, and do not limit the implementation of the present disclosure, and other methods satisfying relevant legal regulations may also be applied to the implementation of the present disclosure.

**It** should be noted that, in this specification, terms such as "first" and "second" are merely used to distinguish one entity or operation from another entity or operation, which do not necessarily require or imply any actual relationship or sequence between these entities or operations. Furthermore, the terms "include", "comprise", or any other variant thereof are intended to cover a non-exclusive inclusion, so that a process, a method, an article, or a device that includes a series of elements not only includes those elements, but also includes other elements that are not explicitly listed, or further includes elements inherent to the process, the method, the article, or the device. An element limited by "including a... " does not exclude other same elements existing in a process, a method, an article, or a device that includes the element, unless otherwise specified.

The foregoing descriptions are merely specific implementations of the present disclosure, so that those skilled in the art can understand or implement the present disclosure. Various modifications to these embodiments will be readily apparent to those skilled in the art, and the general principles defined herein may be implemented in other embodiments without departing from the spirit or scope of the present disclosure. Therefore, the present disclosure will not be limited to the embodiments described herein but will conform to the broadest scope consistent with the principles and novel features disclosed herein.

## Claims

1. A method for video processing, applied to a server, comprising:
obtaining a key frame of a target video;
obtaining a sorting result for color densities of the key frame, and determining a target theme color corresponding to the key frame based on the sorting result for the color densities and a preset theme color selection condition; and
sending information of the target theme color of the key frame to a client, so that the client renders a playback page background of the target video based on the target theme color.

2. The method according to claim 1, wherein obtaining the sorting result for the color densities of the key frame comprises:
projecting a pixel in the key frame into a predetermined initial color space;
obtaining pixel information of the key frame, and segmenting the initial color space based on the pixel information to acquire a plurality of target color spaces;
sorting based on color densities of the key frame respectively corresponding to the plurality of target color spaces to acquire the sorting result for the color densities of the key frame.

3. The method according to claim 2, wherein segmenting the initial color space based on the pixel information to acquire the plurality of target color spaces comprises:
performing at least one segmentation operation on the initial color space based on the pixel information until a preset number of target color spaces are acquired.

4. The method according to claim 2 or 3, wherein the segmentation is performed according to the following steps:
determining color value information of a plurality of target pixels in the key frame projected into a current color space and a distribution number of each the target pixel in the current color space; wherein the current color space corresponding to a first segmentation operation is the initial color space, and the current color space corresponding to a non-first segmentation operation is a color space obtained by a previous segmentation operation;
determining a target channel from a R channel, a G channel and a B channel according to color value information of the plurality of target pixels, wherein a color value difference corresponding to the plurality of target pixels in the target channel is greater than a color value difference corresponding to the plurality of target pixels in other channels; and
obtaining a sorting result for color values corresponding to the plurality of target pixels in the target channel, and segmenting the current color space based on the sorting result for color values and the distribution number of each the target pixel in the current color space.

5. The method according to claim 4, wherein segmenting the current color space based on the sorting result for the color values and the distribution number of each the target pixel in the current color space comprises:
determining a median color value of the sorting result for the color values, and segmenting the current color space into two new color spaces based on the median color value and the distribution number of each the target pixel in the current color space.

6. The method according to claim 2, wherein determining the target theme color corresponding to the key frame based on the sorting result for the color densities and the preset theme color selection condition comprises:
obtaining a centroid color of each of the plurality of target color spaces, and determining a theme color corresponding to each of the plurality of target color spaces based on the centroid color;
acquiring, based on the sorting result for the color densities, a descending sorting result for theme colors respectively corresponding to the plurality of target color spaces; and
selecting, based on the descending sorting result, the target theme color satisfying the preset theme color selection condition.

7. The method according to claim **1,** wherein the preset theme color selection condition comprises a number constraint condition for the target theme color.

8. The method according to claim 7, wherein the preset theme color selection condition further comprises a color value constraint condition for the target theme color.

9. The method according to claim 8, wherein the color value constraint condition comprises: a difference value between any two of a color value of an R channel, a color value of a G channel, and a color value of a B channel of the target theme color being not less than a preset threshold.

10. The method according to claim 1, wherein obtaining the key frame of the target video comprises:
extracting a key frame from a target video at a preset time interval.

11. The method according to claim 1, wherein rendering the playback page background of the target video based on the target theme color comprises:
determining video time information corresponding to the target theme color of the key frame based on a total duration of the target video and the number of key frames;
determining, based on the video time information corresponding to the target theme color, theme color information corresponding to a time period between adjacent key frames; and
rendering the playback page background of the target video according to the target theme color corresponding to the key frame and the theme color information corresponding to the time period between the adjacent key frames.

12. An apparatus for video processing, applied to a server, comprising:
a key frame obtaining module configured to obtain a key frame of a target video;
a target theme color determining module configured to obtaining a sorting result for color densities of the key frame, and determine a target theme color corresponding to the key frame based on the sorting result for the color densities and a preset theme color selection condition; and
a background rendering module configured to send information of the target theme color of the key frame to a client, so that the client renders a playback page background of the target video based on the target theme color.

13. An electronic device, comprising:
a processor; and
a memory for storing instructions executable by the processor;
the processor is configured to read the executable instructions from the memory and execute the instructions to implement the method for video processing according to any of claims 1 to 11.

14. A computer readable storage medium, wherein the storage medium stores a computer program for performing the method for video processing according to any of claims 1 to 11.

15. A computer program product, comprising a computer program, wherein the computer program, when executed by a processor, implements the method for video processing according to any of claims 1 to 11.
